# EUROPEAN PATENT SPECIFICATION

(11) **EP 1 949 351 B1**
(45) Date of publication and mention of the grant of the patent: **22.01.2014**
(21) Application number: 06816730.3
(22) Date of filing: 11.10.2006
(51) Int. Cl.: G09F 3/02, B29C 65/00, B29C 65/36, B29D 23/20

(54) **METHOD OF PRODUCING A SQUEEZE TUBE WITH MAXIMALLY LABELED SURFACE AREA**
VERFAHREN ZUM PRODUZIEREN EINER QUETSCHTUBE MIT MAXIMAL ETIKETTIERTER OBERFLÄCHE
PROCEDE DESTINE A PRODUIRE UN TUBE SOUPLE PRESENTANT UNE SURFACE D'ETIQUETAGE MAXIMISEE

(30) Priority: 14.10.2005 US 251033; 17.07.2006 US 457859
(43) Date of publication of application: 30.07.2008
(73) Proprietor: Tubedec LLC, Mount Laurel, NJ 08054 (US)
(72) Inventor: LANGSEDER, Neal, E., New Canaan, CT 06840 (US); WIEGAND, Edward, Philadelphia, PA 19114 (US)
(74) Representative: O'Connell, Maura
(86) International application number: PCT/US2006/039747
(87) International publication number: WO 2007/047314

(56) References cited:
- WO-A1-2005/085081
- US-A- 2 269 661
- US-A- 3 347 419
- US-A- 3 347 419
- US-A- 4 006 275
- US-A- 6 089 404
- US-A- 6 089 404
- US-B1- 6 588 178

## Description

### Background of the Invention

Various products such as personal care or cosmetic products (*e*.*g*., toothpaste and lotions) are sold to consumers in flexible plastic tubes. Squeezable tube-shaped containers have a tubular body with one end heat-sealed along a straight line seam. For instance, see U.S. Patent Nos. 5,632,951; 3,197,532; 5,908,124; and 5,213,235, which disclose the use of blow molding techniques for forming tube-shaped containers. In addition, U.S. Patent No. 5,908,124 discloses the formation of an integral twist-off closure to eliminate the need for providing a separately manufactured closure. Also see U.S. Patent No. 4,540,542 which discloses a method of making an extrusion blow molded container with an integral, removable closure and U.S. Patent No. 5,141,136 which discloses a squeeze bottle having dual openings. The formation of tubular containers from a longitudinally stretched, extruded, thermoplastic cylinder is described in U.S. Patent No. 3,047,910 and U.S. Patent No. 5,069,856. Side-seam tubes are also generally disclosed in U.S. Patent Nos. 3,959,066 and 4,310,369.

Generally, the squeeze tube is formed by cross-sealing the tubular body with a cross-sealing apparatus. There are various techniques for sealing including hot jaw sealing, wherein the tube is pressed between a pair of heated sealing jaws; sonic welding; induction sealing where a magnetic field is used to excite foil within the tube wall structure to melt the plastic before pressing together; hot air sealing, wherein heated air is used to melt the plastic before pressing; and laser sealing where a laser is used to heat the plastic before pressing. In most cases, the tube is not labeled or decorated in the seal area because damage to the label, ink, or surface coating can occur during sealing. The label or coating can discolor due to the heat, or the label coating or ink may lose adhesion to the tube and separate due to the heat. In addition the application of label material, coating or ink on the surface of the tube in the seal area may affect the seal integrity or contaminate the inside of the seal area and prevent sealing. For these reasons the tube label and decoration generally does not cover the entire surface area of the tube.

While Norden AndBro Inc. teach a medium density polyethylene tube with a full wrap label from Impres Label, which extends through the tube's sealed end, the label on this tube delaminates in the sealed area and is not esthetically pleasing when displayed on store shelves. As such, label manufacturers, such as FASSON Role North America (Painesville, OH), generally recommend that a label's edge be positioned on a tube at least 0.635 cm (¼ inch) from the start of the crimp to avoid subsequent label darting or flagging.

US Patent 6,089,404 discloses a tube (1) that has a metallic casing (2) and a label (3) on the casing. In order to improve the seal of the tube at the fold (6), the label (3) extends beyond the edge region (5) at the end of the tube (1) opposite to the cap (4) to form two adjacent label edge portions (10) and a weld seam or glue seam (9) is provided between the adjacent label edge portions (10) at the fold (6). The weld or glue seam (9) can seal the rear edge (7) of the casing (2) or only prevent an unfolding or release of the fold (6) at the edge region (5).

WO2005085081 discloses a thin-walled plastic tube (1) having an axial direction (a) and a radial direction (r), the plastic tube (1) being manufactured by injection moulding and comprising a tube body (2) with a tube shoulder with an emptying opening (4) at a first end (8) and an end closure (10) at a second end (9), the tube body (2) having a wall thickness of 0.3-1.2 mm. The plastic tube (1) comprises a label (11) applied simultaneously with the injection moulding, the label (11) comprising a plastic film with a tensile strength in the axial direction (a) of the tube (1) which is at least 100 N/mm², preferably at least 150 N/mm², and most preferably at least 210 N/mm² measured according to DIN ISO 527-1/ -3, an elongation at break which is at most 70%, preferably at most 50%, and most preferably at most 25% measured according to DIN ISO 527-1/ -3, and a thickness of at most 90 pm and preferably of at most 75 µm.

### Summary of the Invention

The present invention relates to a method for producing a plastic squeeze tube with maximal surface area labeling according to present claims 1-5.

Squeeze tubes produced by the instant methods are also provided.

### Detailed Description of the Invention

It has now been found that the labeled surface area of a squeeze tube can be maximized by extending the label into the sealed area of the squeeze tube. Advantageously, a label adhered to a tube or tube film in accordance with the disclosed method does not dart or flag and does not delaminate from the tube. As used in the context of the instant invention, a squeeze tube is a flexible, cylindrical package generally made from plastic (*e*.*g*., low to high density polyethylene, polypropylene, polyvinyl chloride, and softouch, dual layer, and coextruded plastics) or laminate film (ethylene vinyl alcohol resin). Squeeze tubes are formed by blow-molding or extruding material into a tube structure or alternatively rolling and adhering tube film (*e*.*g*., monolayer, coextruded or laminate film or sheet stock) into a side-seam tube structure. The tube thus formed is then filled through the open end with a machine designed for filling tubes. Subsequently, the filled tube is sealed at one end resulting in a package with a cylindrical, open end and a flattened, closed end. Accordingly, as one of skill in the art can appreciate, a label of the present invention can be applied to either a preformed tube (*e*.*g*., blow-molded or extruded), or alternatively applied to a tube film prior to generating the tube structure and end sealing.

For the purposes of the instant invention, a tube or tube film used in the manufacture of a tube can be coated or uncoated prior to label adhesion. Coated tube or tube film is intended to mean a material used in the manufacture of a squeeze tube in which a surface coating has been applied. Such surface coatings include any solvent-based, water-based or radiation-curable coating material designed to provide abrasion resistance, barrier properties and optionally enhanced gloss or matte finish. Such surface coatings include epoxies, urethanes, polyesters, acrylics, and the like. Conversely, uncoated tube or tube film is intended to mean a tube material which lacks a surface coating. Unexpectedly, it has been found that the label, when applied through the sealed area of the tube, achieves a comparable level of barrier properties as a coating. Because coating the tube or tube film could inhibit subsequent treatment to achieve a sufficient dyne level, particular embodiments embrace a tube or tube film lacking a surface coating.

The methods of the instant invention can be carried out with a variety of tube materials in combination with a variety of label adhesives. As such, solvent-type adhesives, emulsion-type adhesives or hot-melt type adhesives are suitable so long as the adhesive selected can withstand the heat and pressure of end sealing. Such adhesives include, for example, rubbery adhesive agents, vinyl acetate adhesive agents, ethylene-vinyl acetate adhesive agents, polyvinyl alcohol adhesive agents, polyvinyl acetal adhesive agents, vinyl chloride adhesive agents, acrylic adhesive agents, polyamide adhesive agents, polyethylene adhesive agents, cellulose adhesive agents, polysulfide adhesive agents and hot-melt type high-polymer-containing adhesives. Other methods which promote label adhesion, e.g., a super adhesive, a coating, or other treatment that increases surface energy can also be employed.

The term label is used herein in a broad sense to refer to a substrate that has been printed and subsequently attached to a surface so as to decorate the object or identify its contents. Labels, as used herein, can be supplied in various forms. Such labels can be individually cut and applied, can be cut, carried on and applied from a web of liner material, or can be unsupported, printed film or sheet roll stock that is subsequently laminated to tubes or tube film. Labels of the instant invention are affixed to the surface of a tube or tube film (i.e., the labels are not initially a component of the tube material itself) to provide product identifiers, product source/manufacturer identifiers, bar codes, nutritional information, decoration, and the like. Labels can be made of single or multiple layers and panels of any suitable paper or plastic material commonly employed in the labeling of consumer products. Advantageously, a label of the instant squeeze tube covers at least a portion, e.g., 20%, 40%, 50%, 60%, 80%, or 100% of the flattened, closed end of the squeeze tube, also referred to herein as the sealed area of the squeeze tube. As such, more surface area of the consumer package is available for providing product information or decoration.

To facilitate adhesion, particular embodiments of the present invention embrace pretreating the unlabeled tube material under conditions which achieve a dyne level of at least 34. In other embodiments, a dyne level of 38 to 48, or more is achieved. Such conditions include treating the tube material with flame, plasma, or corona to enhance label adhesion. For example, corona treating involves discharging up to about 10,000 volts of electricity from a ceramic electrode to a ground roll over which the tube material is passing. This high voltage field called corona alters the surface of the film, raising the surface energy of the film so that label adhesion is enhanced. While a dyne level of at least 34 is desirable, it is contemplated that some tube materials could be used at a dyne level of 30 or 32. Surface tension or dyne level can be tested using any standard methods, *e*.*g*., dyne solutions or ACCU DYNE TEST^{™} marker pens.

Because the label of the instant squeeze tube encompasses at least a portion of the seal area of the squeeze tube, the instant invention embraces the use of a tube filling and sealing machine which seals through the label and tube by heating the internal surface of the tube so that the label is exposed to minimal heat during sealing. Suitable sealing techniques which heat the internal tube sealing surface before applying sealing pressure include hot air sealing, sonic welding, laser, and induction. Machines of this type are routinely used in the art of squeeze tube, bag and pouch manufacturing.

A label affixed to a squeeze tube in accordance with the instant method generally has label peel strength adhesion values in the range of 393.7 to 984.25 grams per cm (1000 to 2500 grams/inch) at 30.48 cm/minute (12 inches/minute) pull speed. Optionally, label peel strength adhesion values in the range of 236.2 to 472.4 grams per cm (600 to 1200 grams/inch) or 315.0 to 590.6 grams per cm (800 to 1500 grams/inch) are also satisfactory under particular conditions. As such, particular embodiments embrace a label which does not subsequently delaminate in the sealed area of the labeled tube.

Moreover, the label as affixed herein can be designed to withstand testing that would simulate normal use of the squeeze tube including, but not limited to, the moisture resistance testing, filled and unfilled; oven temperature storage at 45°C, filled and unfilled; product resistance; water submersion; soapy water testing; eight weeks-long term storage at 45°C; and flexing.

The instant method finds application in the manufacture of squeeze tubes for a variety of consumable or purchased goods or products including personal care products (*e.g.,* soaps, shampoos, make-up, insect repellents, and the like); first aid products (*e*.*g*., ointments, sunscreens, and the like); cleaners (*e*.*g*., detergents and cleaning solutions); paints; and foodstuffs (*e*.*g*., yogurt, cheese-like products, jelly, and the like). The instant method is a significant improvement in the manufacture of squeeze tubes because the product label can encompass nearly all of the available surface area of the squeeze tube thereby enhancing the package appearance.

## Claims

1. A method for producing a plastic squeeze tube with maximal surface area labeling comprising sealing through a plastic or laminate film tube and a label adhered thereto, wherein the label encompasses at least a portion of the sealed area of the squeeze tube, thereby producing a squeeze tube with maximal surface area labelling, **characterised in that** the internal surface of the tube is heated before sealing pressure is applied.

2. The method of claim 1, wherein the label is adhered to a preformed plastic or laminate film tube.

3. The method of claim 1, wherein the label is adhered to a plastic or laminate film prior to tube formation.

4. The method of claim 1, wherein the internal surface of the tube is heated before sealing pressure is applied by a sealing technique selected from hot air sealing, sonic welding, laser and induction.

5. The method of claim 1, wherein the label is adhered to the tube with a label adhesive selected from solvent-type adhesives, emulsion-type adhesives and hot-melt type adhesives.

## Patentansprüche

1. Verfahren zum Herstellen einer Kunststoffquetschtube mit maximaler Oberflächenetikettierung, das Verschweißen durch eine Kunststoff- oder Schichtfolientube und ein an diese geklebtes Etikett umfasst, wobei das Etikett mindestens einen Teil des verschweißten Bereichs der Quetschtube umschließt, wodurch eine Quetschtube mit maximaler Oberflächenetikettierung erzeugt wird, **dadurch gekennzeichnet, dass** die Innenfläche der Tube erhitzt wird, bevor Verschweißdruck angelegt wird.

2. Verfahren nach Anspruch 1, bei dem das Etikett an eine vorgeformte Kunststoff- oder Schichtfolientube geklebt wird.

3. Verfahren nach Anspruch 1, bei dem das Etikett vor Tubenausbildung an eine Kunststoff- oder Schichtfolie angehaftet wird.

4. Verfahren nach Anspruch 1, bei dem die Innenfläche der Tube erhitzt wird, bevor Verschweißdruck durch eine Verschweißtechnik angelegt wird, die aus Heißluftschweißen, Schallschweißen, Laser und Induktion ausgewählt wird.

5. Verfahren nach Anspruch 1, bei dem das Etikett mit einem Etikettenklebstoff an die Tube geklebt wird, der aus Klebstoffen vom Lösungsmitteltyp, Klebstoffen vom Emulsionstyp und Klebstoffen vom Schmelzklebertyp ausgewählt wird.

## Revendications

1. Procédé permettant de produire un tube souple en plastique ayant un étiquetage à surface maximale comportant l'étape consistant à souder au niveau d'un tube en plastique ou film laminé et une étiquette collée sur celui-ci, dans lequel l'étiquette recouvre au moins une partie de la zone soudée du tube souple, pour ainsi produire un tube souple ayant un étiquetage à surface maximale, **caractérisé en ce que** la surface interne du tube est chauffée avant l'application de la pression de soudage.

2. Procédé selon la revendication 1, dans lequel l'étiquette est collée sur un tube en plastique ou film laminé préformé.

3. Procédé selon la revendication 1, dans lequel l'étiquette est collée sur du plastique ou film laminé avant la formation du tube.

4. Procédé selon la revendication 1, dans lequel la surface interne du tube est chauffée avant l'application de la pression de soudage par une technique de soudage sélectionnée parmi le soudage par air chaud, le soudage par ultrasons et vibration, le laser et l'induction.

5. Procédé selon la revendication 1, dans lequel l'étiquette est collée sur le tube au moyen d'un adhésif à étiquettes sélectionné parmi les adhésifs à solvant, les adhésifs en émulsion et les adhésifs thermofusibles.
